# EUROPEAN PATENT SPECIFICATION

(11) **EP 3 127 875 B1**
(45) Date of publication and mention of the grant of the patent: **18.05.2022**
(21) Application number: 16182160.8
(22) Date of filing: 01.08.2016
(51) Int. Cl.: C03B 33/033, C03B 33/07

(54) **CUTTING MACHINE FOR CUTTING A GLASS SHEET**
SCHNEIDMASCHINE ZUM SCHNEIDEN EINER GLASPLATTE
MACHINE PERMETTANT DE COUPER DES FEUILLES DE VERRE

(30) Priority: 03.08.2015 IT UB20152791
(43) Date of publication of application: 08.02.2017
(73) Proprietor: Bottero S.p.A., 12100 Cuneo (IT)
(72) Inventor: GHINAMO, Leonardo, 1200 Cuneo (IT); OLOCCO, Guido, 12012 Boves (IT)
(74) Representative: Lovino, Paolo

(56) References cited:
- EP-A2- 1 000 907
- JP-A- H05 254 864
- JP-A- H06 183 763

## Description

The present invention relates to a cutting machine for cutting a glass sheet, in particular a laminated glass sheet, to which the following description specifically refers.

For cutting laminated glass sheets, i.e., those comprising two lateral sheets of glass and an intermediate layer of thermoplastic material, the use is known of cutting machines each comprising a fixed cutting station and two sheet supporting surfaces arranged on opposite longitudinal sides of the cutting station.

The cutting station houses two fixed cutting bridges arranged facing one another and provided with respective motor-powered carriages movable in a fixed rectilinear cutting direction. Each carriage bears a respective incision wheel to make an incision line on the respective external glass sheet. The cutting station also houses a movable breaking member to break the glass sheet opposite the sheet that comes into contact with the support surfaces along the respective incision line.

The prior art machines further comprise, in a position facing each support surface, a respective movable bridge for clamping said sheet against said respective support surface.

Each bridge comprises a respective rigid cross member, which faces and is parallel to the respective support surface, and is coupled to a structure of the machine so as to move from and towards the respective support surface. Moreover, one of the cross members is coupled to the machine structure to move with the respective support surface in a direction orthogonal to the cutting direction to pull the glass sheet held on the opposite side by the other clamping bridge.

To protect the sheets against scratching or splintering, each cross member is provided, on the side facing the respective support surface, with a row of fixed solid pads made of an elastomeric material and spaced apart from one another.

Although the prior art machines of the type described above are widely used, they require continuous control of the action of forcing the bridges against the respective support surfaces to maintain an acceptable level of precision and quality of cutting when there is a change in the thickness of the sheet, the dimension of the sheet in the direction of the cutting line or, above all, in the position of the sheet on the support surfaces along the cutting direction, i.e. in the asymmetry of the sheet with respect to a midplane of the cross members orthogonal to the cutting line, when the width of the sheet is smaller than the length of the cross members.

Experiments have shown that the circumstances described above are mainly the consequence of the uncontrollable deformation of the movable clamping bridges which, when forcing the sheet against the respective surface, tend to bend with the concavity towards the support surface. Under such conditions, the sheet is clamped unevenly and differently from one end of the clamping bridge to the other.

For the same reasons, the pulling force exerted on said sheet varies from one side of the sheet to the other when one clamping bridge is moved away from the other.

Efforts to stiffen the clamping bridges have, on the one hand, failed to solve the problem and, on the other, have made the structure more complex and heavier, and increased production costs.

EP1000907A2 corresponds to the preamble of claim 1 and discloses a flexible tube filled with fluid or gas to balance out the forces and the bending moments transmitted by beams coming into contact with the glass sheet.

The purpose of the present invention is to provide a cutting machine that, unlike the solutions known in the prior art, allows a force to be exerted uniformly on the sheets to press them against the support surfaces, and that is easy to set and control to accommodate any changes in the dimensions and position of the sheet on the support surfaces.

A further purpose of the present invention is to provide a cutting machine that is simple and economical to manufacture and has a low weight and costs.

According to the present invention there is provided a cutting machine for cutting a glass sheet, as defined in claim 1.

The invention will now be described with reference to the accompanying drawings, illustrating a non-limiting embodiment thereof, in which:
figure 1 is a side elevation and substantially block diagram view of a preferred embodiment of a machine for cutting a glass sheet, made according to the teachings of the present invention; and
figure 2 is a reduced-scale side view along the direction of the arrow A of figure 1.

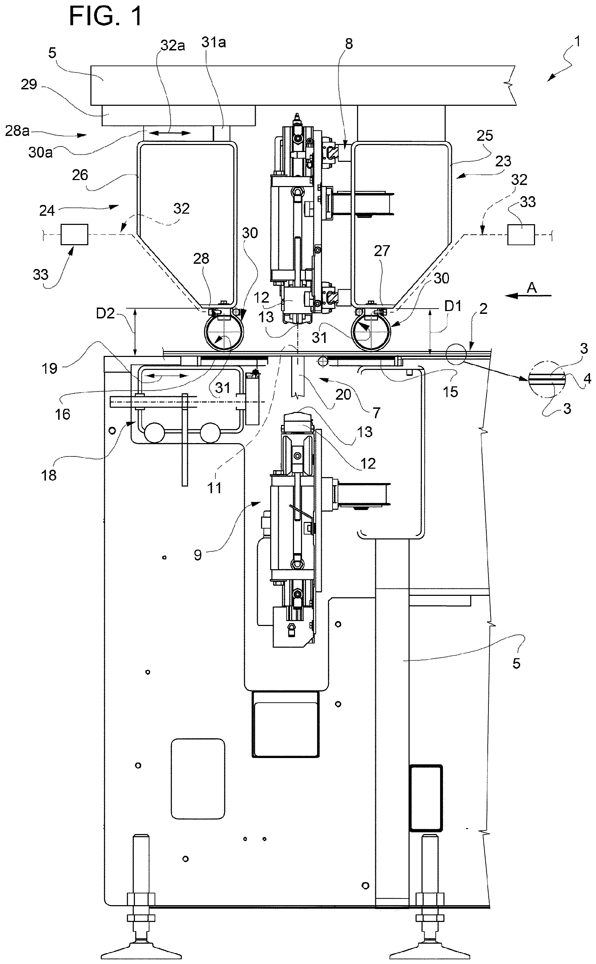

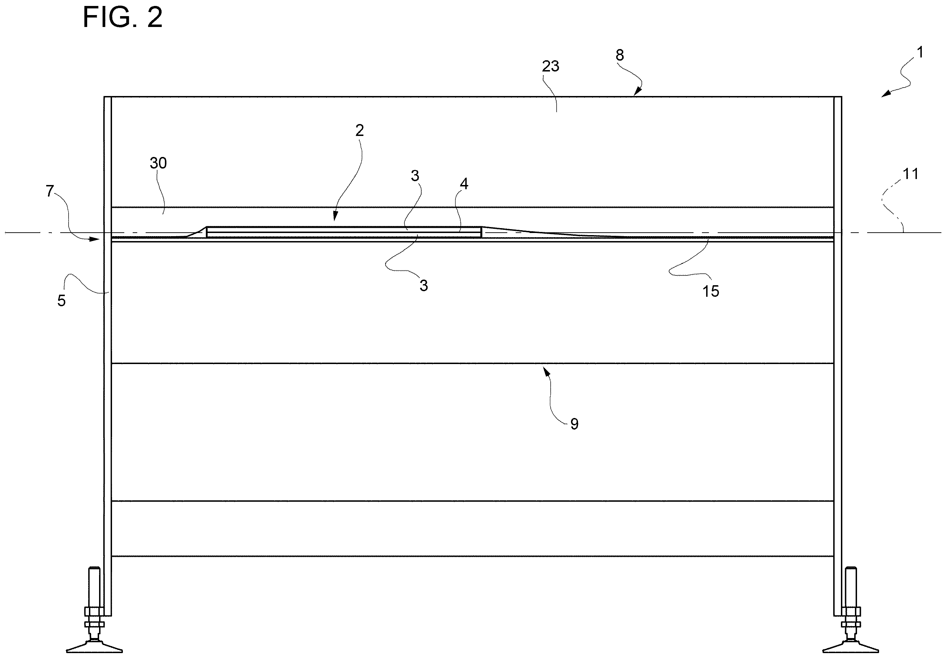

In figures 1 and 2, denoted as a whole by reference numeral 1 is a cutting machine for cutting a laminated glass sheet 2 comprising two lateral sheets 3 of glass and an intermediate layer 4 of thermoplastic material, generally known as PVB.

The machine 1 comprises a fixed frame 5, a sheet incision station 7, which is also fixed and houses a fixed upper incision bridge 8 and a fixed lower incision bridge 9, which are also of a type known in the prior art and therefore not described in detail here. On the lower incision bridge 9 and on the upper incision bridge 8, respective carriages 12 bearing respective incision wheels 13 of the glass sheets 3 are movable in opposite senses along a rectilinear direction of incision 11.

Again with reference to figure 1, the machine 1 further comprises two tables 15 and 16 to support the sheet 2 to be cut, coupled to the frame 5 in a known manner and arranged on opposite sides of the cutting station 7.

In the specific example of the tables 15 and 16 described here, the table 15 is coupled to the frame 5 in a fixed position, whereas the table 16 is coupled to the frame 5 by means of a motor-powered movement device 18, of a type known in the prior art and not described in detail here. The device 18 normally holds the table 16 in a position coplanar with the table 15 and, when activated, moves the table 16 with respect to the table 15 in opposite senses along a direction 19 orthogonal to the incision direction 11.

Again with reference to figure 1, the machine 1 further comprises a breaking bar 20, of a type known in the prior art, arranged between the tables 15 and 16 so that, in use, it bends the sheet 2 and break the glass sheet 3 opposite the one placed to come into contact with the tables 15 and 16.

Again with reference to figure 1, the machine 1 comprises, as a final point, two thrust or clamping bridges for thrusting or clamping the sheet against or to the tables 15,16, denoted by reference numerals 23 and 24, so that the sheet is pushed against the respective tables 15,16. In the specific example described here, the bridges 23 and 24 comprise respective rigid cross members, denoted by reference numerals 25 and 26, which are preferably a boxtype structure made of metallic material. The cross member 25 supports the upper incision bridge 8, extends in a position facing the table 15 and is stably connected to the frame 5 a fixed position and at a predefined distance D1 from said table 15.

The cross member 26 is, instead, coupled to the frame 5 by means of a guideway and slide assembly 28a that is schematically illustrated, having a rectilinear guideway 29 stably connected to the frame 5 in a fixed position. A slide 30a, to which the cross member 26 is integrally connected, is coupled to the guideway 29 and moves in opposite senses under the thrust of a motor-powered actuator 31a along a rectilinear direction 32a parallel to the table 16 and to the direction 19.

The cross member 26, like the cross member 25, is thus kept at a fixed distance D2 from the table 16 and conveniently equal to the distance D1.

Both cross members 25 and 26 end on the side facing the respective tables 15,16 with respective walls 27 and 28 that are preferably, but not necessarily, flat and parallel to the respective tables 15,16.

A respective hollow body 30 that is flexible or elastically yielding and that can be pressurized is stably connected to each of the walls 27,28, on the side facing the respective table 27,28. Each hollow body 30 is conveniently made of an elastomeric material that may or may not be reinforced with reinforcement stitching or threads or is made of fabric at least partially coated in elastomeric or waterproof and possibly reinforced material.

Each hollow body 30 delimits a respective sealed chamber 31 extending for the whole length of the respective cross member 25,26, that is to say for the entire width of the respective table 15,16 measured parallel to the incision line 11.

Each hollow body 30 is connected to the respective cross member in a detachable manner, for instance by means of screws or other equivalent connecting devices.

Each body 30 is fluidically connected to its own supply system 32 for supplying a pressurized fluid, conveniently compressed air. Each system 32 comprises a duct to carry pressurized fluid into the respective sealed chamber 31 and a pressure regulator valve assembly 33, which can be adjusted to change the pressure in the respective sealed chamber 31, for example as a function of the geometry of the sheet 2 to be cut, its thickness and/or the position of the sheet 2 along the incision line 11 (figure 2) so as to generate variable thrusts directly on the sheet 2 depending on the operation performed on said sheet 2, as will be explained more clearly below.

Conveniently, each hollow body 30 is defined by an ordinary flexible or yielding tube having in a non-deformed condition, i.e. when not exerting pressure on the sheet 2, a circular cross section and rectilinear generatrix. Preferably, the tube has a constant cross section along the respective cross member 25,26. Each tube has opposite ends that are closed in a fluid-tight manner to delimit the respective sealed chamber 31.

In use, since the cross members 25 and 26 are arranged at fixed distances from the respective tables 15,16, the thrust or force to push the sheet 2 against said tables 15,16 is only exerted by adjusting the pressure of the fluid introduced into the chamber 31 and thus the pressurization of each of the hollow bodies 30.

The machine 1 described herein is considerably simpler and more reliable than the prior art solutions, in that the cross members 25 and 26 are fixed with respect to the respective tables 15,16.

Because the thrust that is exerted depends exclusively on the pressurization of the hollow bodies 30, the thrust can be controlled and adjusted with great precision depending on the operation performed on the sheet. Experiments have shown that breaking can already be performed at pressures in the region of 0.5 - 1 bar, whereas parting, i.e., actually separating the pieces of sheet obtained after breaking the glass sheets 3 but which are still joined by the intermediate layer 4, requires high pressures of between 1 and 2 bar or even higher.

However, with very low or practically zero pressure in the chambers 31, small cut down sizes of glass sheets can be held on the tables 15,16, whereas with no pressure or with a vacuum in the chambers, it is possible to create safety barriers on-board the machine.

In any case, the use of thrust bridges with cross members arranged at a fixed distance from the respective support tables and hollow bodies that are elastic and/or can be pressurized and, in general, hollow bodies with fixed or controllable stiffness, arranged between said cross members and the sheet to be cut, allow the actions on the sheet to be distributed uniformly, that is to say with no differences from one part of the sheet to the other regardless of the geometry of the sheet or the position of said sheet along the incision line. As shown in figure 2, the hollow bodies 30 are only deformed in the area around the sheet 2 and differently depending on the position of said sheet 2 along the incision line but always loading the sheet 2 in a uniform manner. For these reasons, compared with the solutions known in the prior art, on the one hand, the quality of cutting is improved with the machine 1 described here, for example by preventing splintering or breaking other than where required and, on the other, there is no difference in the quality of cutting when the geometry or position of the sheet on the tables 15,16 changes.

From the above it is apparent that modifications and variations may be made to the machine 1 described herein without departing from the scope of the independent claim. In particular, the shape, geometry or materials of the cross members 25 and 26 and of the hollow bodies 30 may differ from those described by way of example.

Moreover, it is clear that the hollow bodies may delimit more than one sealed chamber and that said sealed chambers may be supplied with fluids at the same or different pressures.

Likewise, several identical or different hollow bodies 30 may be aligned or placed alongside one another along the respective cross member 25,26 to exert the same or different thrusts from one section to the other of the respective cross member.

Lastly, it is clear that thrust or force bridges similar or identical to the bridges 23 and 24 described here can be used on machines for cutting monolithic glass sheets, where there is only one sheet support table, one incision bridge and at least one bridge for thrusting or forcing the sheet against the support table.

The bodies 30 need not be fluidically connected to a pressurized fluid supply system, as described here, but could be brought to and maintained at a fixed pressure value so that a uniform thrust is always exerted on the sheet.

## Claims

1. Cutting machine for cutting a glass sheet, the machine comprising:
- at least one support table (15, 16) for resting the sheet to be cut (2),
- incision means (13) for making at least one incision line on the sheet; and
- at least one thrust bridge (23,24) for thrusting the sheet against the support table (15,16); said thrust bridge (23,24) comprising a rigid cross member (25,26) facing said support table, and at least one flexible hollow body (30) integrally connected to said rigid cross member (25,26) and delimiting at least one sealed chamber (31) that can be pressurized by a pressurized fluid and extends for the entire length of said rigid cross member (25,26);
**characterized in that** said flexible hollow body (30) is stably connected to a wall of said thrust bridge (23,24) and in a position facing said support table (15,16) so as to generate a thrust directly on said sheet.

2. Machine according to claim 1, **characterized by** comprising a supply circuit for supplying a pressurized fluid into said sealed chamber; said supply circuit comprising pressure adjusting means to vary the pressure of said fluid inside said sealed chamber.

3. Machine according to any one of the preceding claims, **characterized by** comprising a fixed frame, and in that said rigid cross member (25,26) is stably connected to said fixed frame at a fixed distance from said support table (15,16) .

4. Machine according to any one of the preceding claims, **characterized in that** said flexible hollow body (30) is defined by a tube closed at opposite ends and delimiting said sealed chamber.

5. Machine according to claim 4, **characterized in that** said rigid cross member (25,26) has an end surface, facing towards said support table (15,16) and parallel to said support table; said closed tube being arranged abutting against said end surface and defining an extension of said rigid cross member (25,26) towards said support table.

6. Machine according to claim 5, **characterized in that** said closed tube has a circular cross-section that is constant along the whole length of the closed tube, and a rectilinear generatrix.

7. Machine according to any one of the preceding claims, **characterized by** comprising:
- a sheet incision fixed station,
- two of said support tables (15,16), arranged on opposite sides of the sheet incision fixed station and
- for each said support table (15,16), a respective thrust bridge for thrusting the sheet against the respective support table (15,16);
each said thrust bridge comprising:
- a respective rigid cross member (25,26),
- a respective flexible hollow body (30), defining a sealed chamber that extends for the whole length of said rigid cross member, and
- a respective supply circuit for supplying a pressurized fluid into the sealed chamber of the corresponding flexible hollow body (30).

## Patentansprüche

1. Schneidmaschine zum Schneiden einer Scheibe, wobei die Maschine umfasst:
- mindestens einen Auflagetisch (15, 16) zum Auflegen der zu schneidenden Scheibe (2)
- Mittel zum Einschneiden (13), um mindestens eine Schnittlinie auf der Scheibe zu erzeugen; und
- mindestens eine Druckbrücke (23, 24) zum Drücken der Scheibe gegen den Auflagetisch (15, 16); wobei die Druckbrücke (23, 24) ein starres Querglied (25, 26), das dem Auflagetisch zugewandt ist, und mindestens einen flexiblen Hohlkörper (30) umfasst, der einstückig mit dem starren Querglied (25, 26) verbunden ist und mindestens eine abgedichtete Kammer (31) begrenzt, die durch ein unter Druck stehendes Fluid unter Druck gesetzt werden kann und sich über die gesamte Länge des starren Querglieds (25, 26) erstreckt;
**dadurch gekennzeichnet, dass** der flexible Hohlkörper (30) dauerhaft mit einer Wand der Druckbrücke (23, 24) verbunden ist und sich in einer Position befindet, die dem Auflagetisch (15, 16) zugewandt ist, um einen Druck direkt auf die Scheibe zu erzeugen.

2. Maschine nach Anspruch 1, **dadurch gekennzeichnet, dass** sie einen Versorgungskreislauf zum Zuführen eines unter Druck stehenden Fluids in die abgedichtete Kammer umfasst; wobei der Versorgungskreislauf Druckeinstellmittel umfasst, um den Druck des Fluids innerhalb der abgedichteten Kammer zu verändern.

3. Maschine nach einem der vorhergehenden Ansprüche, **dadurch gekennzeichnet, dass** sie einen starren Rahmen umfasst, und dass das starre Querglied (25, 26) stabil mit dem starren Rahmen in einem festen Abstand von dem Auflagetisch (15, 16) verbunden ist

4. Maschine nach einem der vorhergehenden Ansprüche, **dadurch gekennzeichnet, dass** der flexible Hohlkörper (30) durch ein Rohr definiert ist, das an den gegenüberliegenden Enden geschlossen ist und die abgedichtete Kammer abgrenzt.

5. Maschine nach Anspruch 4, **dadurch gekennzeichnet, dass** das starre Querglied (25, 26) eine dem Auflagetisch (15, 16) zugewandte und zum Auflagetisch parallele Endfläche aufweist; wobei das geschlossene Rohr an dieser Endfläche anliegt und eine Verlängerung des starren Querglieds (25, 26) zum Auflagetisch hin definiert.

6. Maschine nach Anspruch 5, **dadurch gekennzeichnet, dass** das geschlossene Rohr einen kreisförmigen Querschnitt, der über die gesamte Länge des geschlossenen Rohrs konstant ist, und eine geradlinige Mantellinie aufweist.

7. Maschine nach einem der vorhergehenden Ansprüche, **dadurch gekennzeichnet, dass** sie umfasst:
- eine feste Station für den Scheibenschnitt,
- zwei der genannten Auflagetische (15, 16), die auf gegenüberliegenden Seiten der festen Station für den Scheibenschnitt angeordnet sind, und
- für jeden der Auflagetische (15, 16) eine jeweilige Druckbrücke zum Drücken der Scheibe gegen den jeweiligen Auflagetisch (15, 16);
- wobei jede Druckbrücke umfasst:
- ein jeweiliges starres Querglied (25, 26)
- einen jeweiligen flexiblen Hohlkörper (30), der eine abgedichtete Kammer ausbildet, die sich über die gesamte Länge des starren Querglieds erstreckt, und
- einen jeweiligen Versorgungskreislauf zum Zuführen eines unter Druck stehenden Fluids in die abgedichtete Kammer des entsprechenden flexiblen Hohlkörpers (30).

## Revendications

1. Machine de découpe pour découper une feuille de verre, la machine comprenant :
- au moins une table de support (15, 16) pour reposer la feuille à découper (2),
- des moyens d'incision (13) pour réaliser au moins une ligne d'incision sur la feuille ; et
- au moins un pont de poussée (23, 24) pour pousser la feuille contre la table de support (15, 16 ; ledit pont de poussée (23, 24) comprenant une traverse rigide (25, 26) faisant face à ladite table de support, et au moins un corps creux flexible (30) intégralement connecté à ladite traverse rigide (25, 26) et délimitant au moins une chambre étanche (31) qui peut être mise sous pression par un fluide sous pression et qui s'étend sur toute la longueur de ladite traverse rigide (25, 26) ;
**caractérisée en ce que** ledit corps creux flexible (30) est relié de manière stable à une paroi dudit pont de poussée (23, 24) et dans une position faisant face à ladite table de support (15, 16) de manière à générer une poussée directement sur ladite feuille.

2. Machine selon la revendication 1, **caractérisée en ce qu'** elle comprend un circuit d'alimentation pour fournir un fluide sous pression dans ladite chambre étanche ; ledit circuit d'alimentation comprenant des moyens de réglage de la pression pour faire varier la pression dudit fluide à l'intérieur de ladite chambre étanche.

3. Machine selon l'une quelconque des revendications précédentes, **caractérisée en ce qu'**elle comprend un châssis fixe, et **en ce que** ladite traverse rigide (25, 26) est reliée de manière stable audit châssis fixe à une distance fixe de ladite table de support (15, 16).

4. Machine selon l'une quelconque des revendications précédentes, **caractérisée en ce que** ledit corps creux flexible (30) est défini par un tube fermé aux extrémités opposées et délimitant ladite chambre étanche.

5. Machine selon la revendication 4, **caractérisée en ce que** ladite traverse rigide (25, 26) a une surface d'extrémité, tournée vers ladite table de support (15, 16) et parallèle à ladite table de support ; ledit tube fermé étant disposé en butée contre ladite surface d'extrémité et définissant une extension de ladite traverse rigide (25, 26) vers ladite table de support.

6. Machine selon la revendication 5, **caractérisée en ce que** ledit tube fermé a une section transversale circulaire qui est constante sur toute la longueur du tube fermé, et une génératrice rectiligne.

7. Machine selon l'une quelconque des revendications précédentes, **caractérisée en ce qu'**elle comprend :
- un poste fixe d'incision de feuilles,
- deux desdites tables de support (15, 16), disposées sur des côtés opposés du poste fixe d'incision de feuille et
- pour chacune desdites tables de support (15, 16), un pont de poussée respectif pour pousser la feuille contre la table de support respective (15, 16) ; chacun desdits ponts de poussée comprenant :
- une traverse rigide respective (25, 26),
- un corps creux flexible respectif (30), définissant une chambre étanche qui s'étend sur toute la longueur de ladite traverse rigide, et
- un circuit d'alimentation respectif pour fournir un fluide sous pression dans la chambre étanche du corps creux flexible (30) correspondant.
